# EUROPEAN PATENT APPLICATION

(11) **EP 2 139 161 A1**
(43) Date of publication of application: **30.12.2009**
(21) Application number: 08734072.5
(22) Date of filing: 15.04.2008
(51) Int. Cl.: H04L 12/24

(54) **CONFIGURATION NERWORK EQUIPMENT METHOD, NETWORK EQUIPMENT AND NETWORK SYSYTEM**

(30) Priority: 04.06.2007 CN 200710110592
(71) Applicant: Huawei Technologies Co., Ltd., Longgang District, Shenzhen Guangdong 518129 (CN)
(72) Inventor: JI, Xiaofeng, Shenzhen, 518129 (CN)
(74) Representative: Kreuz, Georg Maria
(86) International application number: PCT/CN2008/070714
(87) International publication number: WO 2008/148316

(57) **Abstract**

A network equipment configuration method, network equipment, and a network system are provided. The method includes the following steps. The network equipment receives configuration information. The configuration information comprises an identifier of a configuration template to be called and configuration parameters. The network equipment calls a configuration template that is locally pre-stored and identified by the configuration template identifier and puts the configuration parameters into the configuration template, so that the network equipment is configured. The configuration template is based on an extensible markup language (XML). The technical solutions in which the embodiments are applied may reduce configuration codes that need to be delivered for each configuration and decrease information redundancy of interactions between a management user and the network equipment for each configuration, so as to increase a configuration efficiency of the network equipment.

## Description

### CROSS-REFERENCE TO RELATED APPLICATION

The application claims the benefit of priority to China Patent Application No. 200710110592.2, filed on June 4, 2007, and entitled "CONFIGURATION NETWORK EQUIPMENT METHOD, NETWORK EQUIPMENT AND NETWORK SYSYTEM", which is all incorporated herein by reference in its entirety.

### FIELD OF THE TECHNOLOGY

The present invention relates to the field of communication, and more particularly to a network equipment configuration method, network equipment, and a network system.

### BACKGROUND OF THE INVENTION

The network configuration protocol (NETCOF) is a protocol for providing network equipment configuration and installation, maintenance, deletion scheme management based on the extensible markup language (XML). The NETCOF uses XML data to encapsulate configuration data, and realizes corresponding NETCOF operations through simple remote procedure call (RPC).

Network equipment is configured by using the NETCOF. The following configuration process is usually used for configuration each time.

A management user located at a client delivers an XML text to the network equipment to be configured, and requests reading information on the network equipment. The network equipment reports the needed information to the management user according to the request. The management user then obtains information of specific objects to be configured according to the reported information and completes configuration logic processing at the client, and delivers a result of the configuration logic processing (specific configuration information of specific objects to be configured, that is, a set of description of specific configuration operations) to the network equipment. The network equipment configures the specific objects to be configured correspondingly according to the delivery.

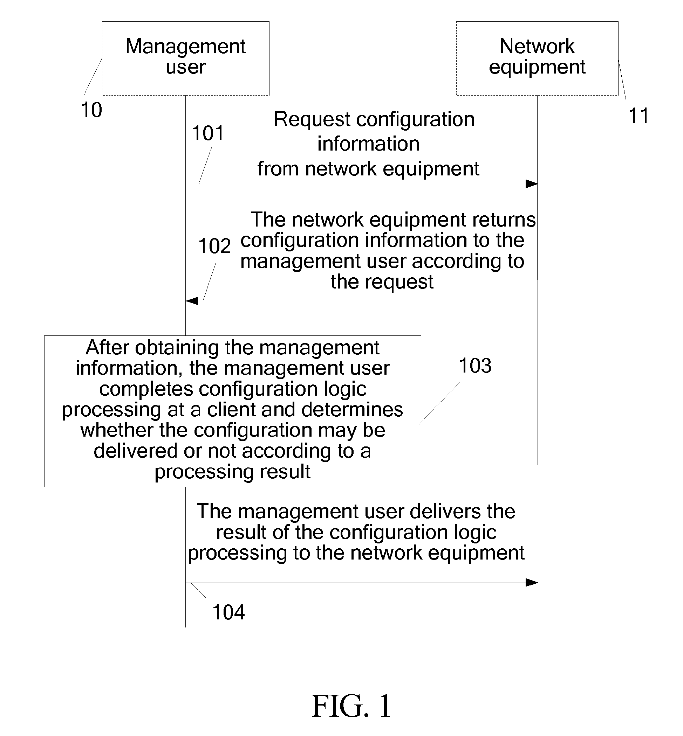

For the configuration manner as shown in FIG. 1, when the management user needs to configure the network equipment, the following processes are performed. In step 101, a management user 10 requests configuration information from network equipment 11. In step 102, the network equipment 11 returns the configuration information to the management user 10 according to the request. In step 103, after the management user 10 obtains the management information, the management user 10 completes a configuration logic processing at the client, and determines whether configuration may be delivered or not according to the processing result. If yes, step 104 is performed. In step 104, the management user 10 delivers the result of the configuration logic processing to the network equipment 11, so that the network equipment 11 is correspondingly configured according to the logic processing result.

### SUMMARY OF THE INVENTION

The present invention is directed to a network equipment configuration method, network equipment, and a network system, so as to increase the configuration efficiency of the network equipment

As a first aspect of the present invention a network equipment configuration method is provided, which generally includes the following steps.

Network equipment receives configuration information. The configuration information includes an identifier of a configuration template to be called and configuration parameters.

The network equipment calls a configuration template pre-stored locally and identified by the configuration template identifier, and puts the configuration parameters into the configuration template to configure the network equipment.

The configuration template is based on the extensible markup language (XML).

As a second aspect of the present invention network equipment is provided, which generally includes a receiving unit, a template storing unit, and a configuring unit.

The receiving unit is configured to receive configuration information. The configuration information includes an identifier of a configuration template to be called and configuration parameters.

The template storing unit is configured to store the configuration template. Each stored configuration template corresponds to an identifier of the configuration template. The configuration template is based on the XML.

The configuring unit is configured to call a configuration template identified by the configuration template identifier from the template storing unit according to the configuration template identifier contained in the configuration information received by the receiving unit, and configure the network equipment according to the configuration parameters contained in the configuration information received by the receiving unit.

As a third aspect of the present invention further a network system is provided, which generally includes a network equipment management system and network equipment.

The network equipment management system includes a configuration information delivering unit. The configuration information delivering unit is configured to deliver configuration information to the network equipment. The configuration information includes an identifier of a configuration template to be called and configuration parameters.

The network equipment is configured to receive the configuration information delivered by the network equipment management system, call the configuration template pre-stored locally and identified by the configuration template identifier, and put the configuration parameters into the configuration template to configure the network equipment.

The configuration template is based on the XML.

It can be seen from the above description that, according to the technical solutions of the embodiments, an XML-based configuration template is pre-stored on the network equipment. When a management user needs to configure the network equipment, the management user needs to deliver configuration information including an identifier of a configuration template to be called and configuration parameters only. After receiving the configuration information, the network equipment calls a configuration template pre-stored locally and corresponding to the configuration template identifier, and puts the delivered configuration variable and configuration parameters of the variable into the configuration template to configure the network equipment. It is no longer necessary as in the technical solution in the prior art that a complete configuration code needs to be delivered to the network equipment for each configuration and the network equipment performs the delivered configuration code to complete the current network equipment. Therefore, the technical solutions of the embodiments reduce configuration codes to be delivered for configuration and decrease the redundancy of information interacted between the management user and the network equipment during each configuration, so as to increase the configuration efficiency of the network equipment.

### BRIEF DESCRIPTION OF THE DRAWINGS

FIG. 1 is a schematic view of a network equipment configuration method in the prior art;
FIG. 2 is a schematic flowchart of a network equipment configuration method according to a first embodiment of the present invention;
FIG. 3 is a schematic structural view of network equipment according to a fifth embodiment of the present invention; and
FIG. 4 is a schematic structural view of a network system according to a sixth embodiment of the present invention.

### DETAILED DESCRIPTION OF THE EMBODIMENTS

The configuration manner shown in FIG. 1 has following disadvantages.

First, when network equipment is configured, even if configuration often delivered are similar and information transmitted between a management user and configured network equipment during each configuration are almost the same, a configuration text including configuration actions, configuration parameters completely needs to be delivered to the network equipment during each configuration, so that redundancy of information transmitted between the management user and the network equipment is high and the configuration efficiency is low.

Second, when the network equipment is configured each time, usually a lot of interactions exist between the management user (client) and the network equipment, and the configuration efficiency is low. During each configuration, when the management user needs to explicitly inform interfaces of objects to be configured on the network equipment. For example, when the interfaces that need to be configured are all Ethernet 0/0 interfaces, the management user needs to read IP addresses of all the Ethernet 0/0 interfaces from the network equipment. After reading, a set of configuration information of all the IP addresses of the Ethernet 0/0 interfaces is then delivered to the network equipment.

Third, the management user is unable to perform configuration according to the latest configuration information on the network equipment, so that the configuration success ratio is unable to be ensured. When the network equipment is configured, the management user first needs to read corresponding information on the network equipment to local. A corresponding configuration logic processing is performed locally according to the read information so as to obtain a configuration result. The configuration result is delivered to the network equipment, and the network equipment performs configuration according to the obtained result. As a certain time interval exists between that the management user reads the configuration information and that the network equipment performs specific configuration operation, when the network equipment performs specific configuration operations according to the delivered configuration result, current actual configuration information may already be changed compared with the configuration information according to the configuration result, causing that the specific configuration may be unsuccessful. Also, the management user is unable to predict the result that the configuration is unsuccessful.

However, in order to avoid the above problems, after the network equipment reports the configuration information to the management user, the reported configuration information may be locked (modification is not permitted), thereby ensuring that the current actual configuration information and the configuration information according to the configuration result are consistent when the network equipment performs specific configuration operations according to the delivered configuration result, so as to increase the success rate of configuration. However, the locking operation decreases the operation efficiency of the network equipment. At the same time, the locking of the configuration information also causes a new problem that it is inconvenient for other management users to configure the configuration information.

Embodiments of the present invention provide a network equipment configuration method, network equipment, and a network system, so as to increase the configuration efficiency of the network equipment.

Embodiments of the present invention are illustrated in detail below with reference to the accompanying drawings and embodiments. Here, the exemplary embodiments and the illustrations of the present invention are only intended to explain the present invention, rather than to limit the present invention.

In the first, second, third, and fourth embodiments below, the network equipment configuration method provided is illustrated. In the fifth embodiment, a structure of the network equipment provided in the present invention is illustrated. In the sixth embodiment, a structure of the network system provided in the present invention is illustrated.

### Embodiment 1

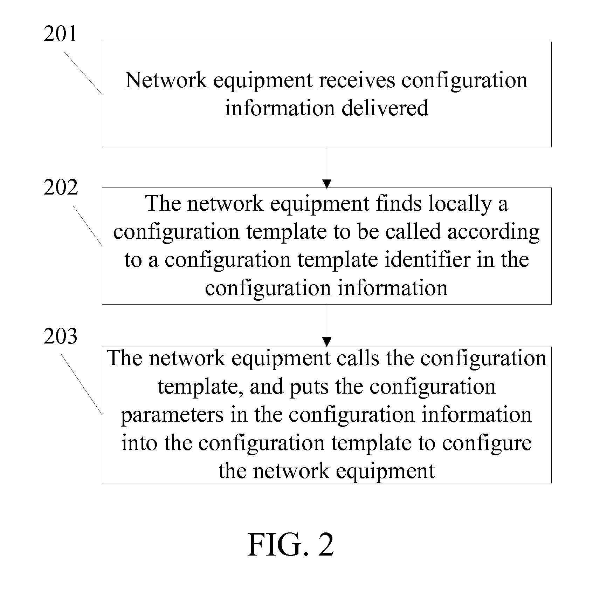

FIG. 2 is a schematic flow chart of a network equipment configuration method according to an embodiment. As shown in FIG. 2, the method includes the following steps.

In step 201, network equipment receives configuration information delivered by a management user.

When the management user needs to configure the network equipment in step 201, the management user may deliver configuration information including information such as an identifier of a configuration template to be called and configuration parameters to the network equipment.

For a network system based on the network configuration (NETCONF) protocol, the management user may deliver the configuration information by using a text, and the text may be, but not limited to, an extensible markup language (XML) text, or an extensible stylesheet language transformation (XSLT) language text, or an XML query language (also referred to as XQuery language, which is a new query language for XML-based markup document contents in archival and databases), or other XML-based texts.

In step 202, the network equipment locally finds a configuration template to be called according to a configuration template identifier in the configuration information.

After receiving the configuration information delivered by the management user, the network equipment finds a local configuration template corresponding to the configuration template identifier according to the configuration template identifier in the information, that is, a configuration template that currently needs to be called.

The configuration template pre-stored on the network equipment is based on the XML. The XML-based language may be XML, XSLT, XQuery languages or other XML-based languages.

The pre-stored configuration template may be edited and pre-stored on the network equipment by a user, and may also be remotely received (for example, from a network equipment management system of a client) and pre-stored by the network equipment.
The network equipment may locally store a mapping table of template identifiers and template storage locations, so as to obtain a storage location of a configuration template to be called through the mapping table.

In step 203, the network equipment calls the configuration template, and puts the configuration parameters in the configuration information into the configuration template to configure the network equipment.

The network equipment calls the configuration template found in step 202. In the configuration template, configuration parameters delivered by the management user is put to a corresponding location in the configuration template. A configuration script required by the current network configuration is obtained, so that the configuration script is performed to complete the current network configuration.

It can be seen from the above description that, by applying the method in this embodiment, an XML-based configuration template is pre-stored on the network equipment. When a management user needs to configure the network equipment, the management user needs to deliver configuration information including an identifier of a configuration template to be called and configuration parameters only. After receiving the configuration information, the network equipment calls a configuration template pre-stored locally and corresponding to the configuration template identifier, and puts the delivered configuration parameter into the configuration template to configure the network equipment. It is no longer necessary as in the technical solution in the prior art that a complete configuration code is delivered to the network equipment for each configuration and the network equipment performs the delivered configuration code to complete current configuration of the network equipment. Therefore, the technical solution in this embodiment reduces the configuration codes to be delivered for the configuration and decreases the redundancy of information interacted between the management user and the network equipment during each configuration, so as to increase the configuration efficiency of the network equipment.

### Embodiment 2

In this embodiment, a configuration template using an XSLT is taken as an example, so as to further illustrate the network equipment configuration method according to the first embodiment in detail.

As the XSLT supports flexible logic operations on the configuration data such as traversal, determination, retrieval, and conversion, the configuration template using the XSLT may include configuration logic, so that some logic operations of the configuration may be performed on the network equipment. The management user only needs to deliver corresponding configuration logic to the network equipment as follows.

A current management user needs to perform the following network equipment configuration, including deleting IP addresses 10.111.64.21 and 10.111.64.22 in an Ethernet interface.

A configuration template having a file name (which may serve as a file identifier) being undoip.xslt is stored on the network equipment. A specific script text of the configuration template is described as follows.

```
 <?xml version="1.0" encoding="UTF-8"?>
 <xsl:stylesheet version="1.0" xmlns:xsl="http://www.w3.org/1999/XSL/Transform"
 xmlns:fo="http://www.w3.org/1999/XSL/Format">
   <xsl:template name="undoip"> //template name
        <xsl:param name="iftype"/> //parameter name
        <xsl:param name="ipaddrs"/> //parameter name
        <xsl:for-each select="interface"> //configuration logic
             <xsl:variable name="ifkeyl" select="@ifIndex"/>
             <xsl:if test="$ifType='Ethernet"'>
             <xsl:for-each select="/device/IPAddrTable/IPAddress[ifIndex=$ifkey1]">
                  <xsl:variable name="ipaddr" select="ipAddr"/>
                  <xsl:if test="contains ($ipaddrs, $ipaddr) ">
                       <dev:config xc:operation="delete"> //configuration
 operation
                            <xsl:value-of select="$ipaddr"/>
                       </dev:config>
                  </xsl:if>
             </xsl:for-each>
             </xsl:if>
        </xsl: for-each>
   </xsl:template>
 </xsl: stylesheet>
```

When the management user needs to perform network equipment configuration of deleting IP addresses 10.111.64.21 and 10.111.64.22 in the Ethernet interface, a configuration template may be specified and configuration parameters may be delivered. The management user may deliver the configuration information to the network equipment in an XSLT text, which is specifically described as follows.

```
 <?xml version="1.0" encoding="UTF-8"?>
 <rpc xmlns="urn:ietf:params:xml:ns:netconf:base:1.0" message-id="101">
   <edit-config>
        <target>
             <running/>
        </target>
        <templateconfig>
             <xsl:call-template name="undoip"> //specify a file name of a
 configuration template
                  <xsl:with-param name="iftype">Ethernet</xsl:with-param> //parameter
 name is an Ethernet interface
                  <xsl:with-param name="ipaddrs">
                       <ipaddr> 10.111.12.21 </ipaddr> //the IP address is
 10.111.12.21
                       <ipaddr> 10.111.12.22 </ipaddr> //the IP address is
 10.111.12.22
                  </xsl:with-param>
             </xsl:call-template>
        </templateconfig>
   </edit-config>
 </rpc>
```

After receiving the configuration information, the network equipment puts corresponding parameters into a configuration template having a file name being undoip.xslt, so that the following configuration script is obtained.

```
 <xsl:for-each select="interface">
        <xsl:variable name="ifkeyl" select="@iflndex"/>
        <xsl: if test="ifType='Ethernet"'>
             <xsl:for-each select="/device/IPAddrTable/IPAddress[ifIndex=$ifkeyl]">
                  <xsl:variable name="ipaddr" select="ipAddr"/>
                  <xsl:if test="$ipaddr='10.111.64.21"'>
                       <dev:config xc:operation="delete">
                            <xsl:value-of select="$ipaddr"/>
                       </dev:config>
                  </xsl:if>
                  <xsl:if test="$ipaddr='10.111.64.22"'>
                       <dev:config xc:operation="delete">
                            <xsl:value-of select="$ipaddr"/>
                       </dev:config>
                  </xsl:if>
             </xsl:for-each>
        </xsl:if>
   </xsl:for-each>
```

The network equipment realizes the following logic according to the configuration script of the current configuration. All interfaces on the network equipment are traversed, so as to find all Ethernet interfaces. It is determined whether the interfaces have address configuration such as 10.111.64.21 or 10.111.64.22. If yes, the interfaces currently satisfying the condition are taken as a sub-set of configurable configuration objects. The current configuration actions are performed on the sub-set of the configurable configuration objects, including deleting such configuration and returning a configuration result to the management user after the configuration is performed. If not, the network equipment may also return a determination result to the management user.

It can be seen from the above description that, the configuration template using the XSLT is able to realize the following effects. During the network configuration, the management user needs to specify a configuration template to be called for the current configuration and the configuration parameters for the current configuration only. The network equipment calls the corresponding configuration template and performs specific configuration logic determination according to the corresponding parameters and the latest information of the current network equipment, so as to perform corresponding network configuration according to the determination. The method according to this embodiment not only greatly reduces configuration codes to be delivered for the configuration compared with the prior art, but also decreases the redundancy of information interacted between the management user and the network equipment for each configuration, thereby increasing the configuration efficiency of the network equipment.

In addition, for the method according to this embodiment, during configuration, the network equipment performs determination of the configuration logic processing according to the latest configuration information on the current network equipment to perform corresponding configuration, so that the configuration contents may be flexibly adjusted according to the latest situation of configuration data, so as to avoid the problem in the prior art that the configuration information for the configuration might be inconsistent with the current latest situation, thereby greatly increasing a success rate of configuration.

### Embodiment 3

In this embodiment, the configuration template using the XSLT is still taken as an example to further illustrate the network equipment configuration method according to the first embodiment in detail.

Different from the second embodiment, in this embodiment, the configuration template using the XSLT does not include any configuration logic. The specific configuration logic may be carried when the management user delivers the configuration information.

A current management user needs to perform the following network equipment configuration, including deleting in batch users of which user groups are within admin but names are not fred.

A configuration template having a file name (which may serve as a file identifier) being delusers.xslt is stored on the network equipment. A specific script text of the configuration template is described as follows.

```
 <?xml version="1.0" encoding="UTF-8"?>
 <xsl:stylesheet version="1.0" xmlns:xsl="http://www.w3.org/1999/XSL/Transform"
 xmlns:fo="http://www.w3.org/1999/XSL/Format">
   <xsl:template name="delusers"> //file name
        <xsl:param name="users"/> //configuration parameter name
        <dev:config xc:operation="delete"> //configuration parameter
             <xsl:value-of select="$users"/>
        </dev:config>
   </xsl:template>
 </xsl:stylesheet>
```

When the management user needs to delete in batch users of which user groups are within admin but names are not fred, the management user may specify a configuration template and deliver configuration parameters. The management user may deliver the configuration information to the network equipment in an XML.XPath manner, which may be specifically described as follows.

```
 <?xml version="1.0" encoding="UTF-8"?>
 <rpc xmlns="urn:ietf:params:xml:ns:netconf:base:1.0" message-id="101">
   <edit-config>
        <target>
             <running/>
        </target>
        <templateconfig>
             <xsl:call-template name="delusers"> //specified file name
                  <xsl:with-param name="users" //configured parameter name
                       select="top/users/user[group='admin' name!='fred']/> //filtering
 logic expression in an XML.XPath manner
             </xsl:call-template>
        </templateconfig>
   </edit-config>
 </rpc>
```

After receiving the configuration information, the network equipment expresses a specific parameter having a parameter name "users" through a filtering logic expression in an XML.XPath manner, and sub puts the parameter in a corresponding configuration variable in a configuration script having a file name "delusers.xslt". According to the filtering logic expression in the XML.XPath manner and a latest current situation, a sub-set of current configurable configuration objects may be obtained, including all the users of which the user groups are within the admin but the names are not fred currently in the network equipment. The configuration script after the substitution may be performed to perform in batch a current configuration operation on the sub-set of current configurable configuration objects, that is, to delete all the users of which the user groups are within the admin but the names are not fred.

It can be seen from the above description that, in the method according to this embodiment, configuration filtering logic is delivered in the XML.XPath manner. The network equipment obtains a sub-set of configuration objects to be configured currently according to the current latest information of the network equipment, and calls a corresponding configuration template, so that the configuration supports batch processing after filtering, thus greatly increasing the configuration efficiency.

Similar to the method according to the first embodiment, in the method according to this embodiment, the network equipment performs determination of configuration logic processing according to the latest configuration information on the current network equipment to perform corresponding configuration during configuration, so that the configuration contents may be flexibly adjusted according to the latest situation of the configuration data, thus avoiding a problem in the prior art that the configuration information for the configuration might be inconsistent with a current latest situation, thereby greatly increasing the success rate of configuration.

### Embodiment 4

In this embodiment, a configuration template using an XML is taken as an example to further illustrate the network equipment configuration method according to the first embodiment in detail.

For example, a current management user needs to perform the following network equipment configuration, including configuring an interface having an Ethernet interface 0/0, a prefix length 24, and an IP address 192.0.2.4.

A configuration template having a file name (which may serve as a file identifier) being interface-address-config.xml is stored on the network equipment. A specific script text of the configuration template may be described as follows.

```
 <?xml version="1.0" encoding="UTF-8"?>
 <interface xc:operation="replace"> //configuration operation: replace
   <ifname>$ifname</name> //parameter name $ifname blank
   <address>
        <ip>$ip</ip> //parameter name $ip blank
        <prefix-length>$Prefix-length</prefix-length>//parameter name $Prefix-length
 blank
   </address>
 </interface>
```

When the management user needs to configure the interface having the Ethernet interface 0/0, the address prefix length 24, and the IP address 192.0.2.4, the management user may specify a configuration template and deliver the configuration parameters. The management user may deliver the configuration information to the network equipment in an XSLT text, which may be specifically described as follows.

```
 <?xml version="1.0" encoding="UTF-8"?>
 <rpc xmlns="urn:ietf:params:xml:ns:netconf:base:1.0" message-id="101">
   <edit-config>
        <target>
             <running/>
        </target>
        <templateconfig>
             <dev:config-template name="interface-address-config.xml "> //specify a
 file name of a configuration template to be called;
                  <dcv:sct-para name="$name">Ethernet0/0</dev:set-para> //specify a
 parameter of $name as Ethernet 0/0;
                  <dev:set-para name="ip">192.0.2.4</dev:set-para>
   //specify a parameter of an ip address as 192.0.2.4;
                  <dev:set-para name="Prefix-length">24</dev:set-para>
 //specify a parameter of a prefix-length as 24;
             </dev:config-template>
        </templateconfig>
   </edit-config>
 </rpc>
```

After receiving the configuration information, the network equipment puts corresponding parameters in a configuration template having the file name being interface-address-config.xml, so that the following configuration script is obtained, that is, a configuration segment ready to be submitted is formed.

```
 <interface xc:operation="replace">
        <name>Ethernet0/0</name>
        <address>
             <ip>192.0.2.4</ip>
             <prefix-length>24</prefix-length>
        </address>
 </interface>
```

The network equipment submits the configuration segment ready to be submitted to a whole set of configuration objects of the network equipment (that is, the configuration set <running/>), so as to perform corresponding configuration on the network equipment.

It can be seen from the above description that, in this embodiment, a configuration template using the XML with parameter blanks is pre-stored on the network equipment. When the management user needs to perform network configuration, the management user only needs to deliver configuration parameters to be configured currently and specify a configuration template, rather than to deliver a specific configuration script for performing the configuration. Therefore, the configuration codes to be delivered are reduced and the redundancy of information interacted between the management user and the network equipment during each configuration is decreased, so as to increase the configuration efficiency of the network equipment.

Persons of ordinary skill in the art should understand that all or a part of the steps of the method according to the embodiments may be implemented by a program instructing relevant hardware. The program may be stored in a computer readable storage medium. When the program is run, the following steps may be included. The network equipment receives configuration information, and the configuration information includes the identifier of the configuration template to be called and the configuration parameters. The network equipment calls the configuration template pre-stored locally and identified by the configuration template identifier, and puts the configuration parameters into the configuration template to configure the network equipment. The configuration template is based on the XML. The so-called store medium here is an ROM/RAM, a magnetic disk, an optical disk, and the like.

### Embodiment 5

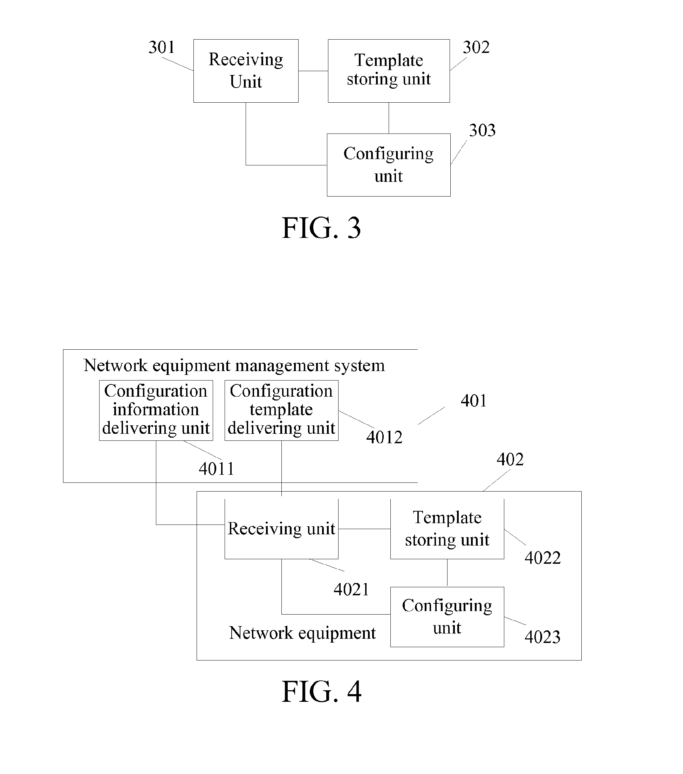

FIG. 3 is a schematic structural view of network equipment according to an embodiment. As shown in FIG. 3, the network equipment includes a receiving unit 301, a template storing unit 302, and a configuring unit 303.

The receiving unit 301 is configured to receive configuration information. The configuration information includes an identifier of a configuration template to be called and configuration parameters.

The template storing unit 302 is configured to store the configuration template. Each stored configuration template corresponds to an identifier of the configuration template. The configuration template is based on an XML (including, but not limited to, XML, XSLT, and the like).

The configuration template stored by the template storing unit 302 is a configuration script using the XSLT, or a configuration script using the XSLT and including the configuration logic, or a configuration segment using the XML, or a configuration script using an XQuery language.

The configuration template stored by the template storing unit 302 may be edited and pre-stored on the network equipment by a user, and may also be remotely received (for example, from a network equipment management system) and pre-stored by the network equipment.

The configuring unit 303 is configured to call a configuration template stored in the template storing unit 302 and identified by a configuration identifier according to the configuration template identifier contained in the configuration information received by the receiving unit 301. The network equipment is configured according to the configuration parameters contained in the configuration information received by the receiving unit 301. The specific configuration principles are presented in the corresponding description of the first, second, third, or fourth embodiment.

It can be seen from the above description that, as in this embodiment the XML-based configuration template is pre-stored on the network equipment, when a management user needs to configure the network equipment, the management user needs to deliver configuration information including the identifier of the configuration template to be called and the configuration parameters only. After receiving the configuration information, the network equipment calls a configuration template pre-stored locally and corresponding to the configuration template identifier, and puts the delivered configuration parameter into the configuration template to configure the network equipment. It is no longer necessary as in the technical solution in the prior art that a complete configuration code is delivered to the network equipment and the network equipment performs the delivered configuration code to complete the current configuration of the network equipment during each configuration. It can be seen that the technical solution in this embodiment reduces configuration codes to be delivered for the configuration and decreases redundancy of information interacted between the management user and the network equipment during each configuration, so as to increase the configuration efficiency of the network equipment.

It should be noted that the network equipment according to this embodiment may be implemented through both hardware and software function templates. The device according to this embodiment may be sold and used as a separate product, and may also be stored in a computer readable storage medium.

### Embodiment 6

FIG. 4 is a schematic structural view of a network system according to an embodiment. As shown in FIG. 4, the network system includes a network equipment management system 401 and network equipment 402.

The network equipment management system 401 is configured to deliver configuration information to the network equipment 402. The configuration information includes an identifier of a configuration template to be called and configuration parameters.

The network equipment management system 401 may include a configuration information delivering unit 4011.

The configuration information delivering unit 4011 is configured to deliver the configuration information to the network equipment 402 when the network equipment 402 needs to be configured.

The network equipment management system 401 may further include a configuration template delivering unit 4012.

The configuration template delivering unit 4012 is configured to deliver an XML-based configuration template to the network equipment 402. The configuration template delivering unit 4012 may further enable a management user to edit remotely and deliver configuration templates to the network equipment, so that the network equipment 402 pre-stores these configuration templates, so as to call the pre-stored configuration template in practical configuration.

The network equipment 402 is configured to receive the configuration information delivered by the configuration information delivering unit 4011 of the network equipment management system 401, call the configuration template pre-stored locally and identified by the configuration template identifier, and put the configuration parameters into the configuration template to configure the network equipment. The configuration template is based on an XML language, for example, a configuration script using an XSLT, or a configuration script using the XSLT and including configuration logic, or an XML-based configuration segment, or a configuration script using an XQuery language.

The network equipment 402 may include a receiving unit 4021, a template storing unit 4022, and a configuring unit 4023.

The receiving unit 4021 is configured to receive information delivered by the network equipment management system 401. The information includes the configuration information delivered by the configuration information delivering unit 4011 of the network equipment management system 401, and may also include the configuration template delivered by the configuration template delivering unit 4012 of the network equipment management system 401.

The template storing unit 4022 is configured to store configuration templates, and each stored configuration template corresponds to an identifier of the configuration template. Correspondingly, the configuration template stored by the template storing unit 302 is a configuration script using XSLT, or a configuration script using the XSLT and including configuration logic, or a configuration segment using the XML, or a configuration script using the XQuery language.

The configuration template stored by the template storing unit 4022 may be edited and pre-stored on the network equipment 402 by a user, and may also be remotely received (for example, from the network equipment management system 401) and pre-stored by the network equipment 402.

The configuring unit 4023 is configured to call a configuration template identified by an identifier according to the configuration template identifier contained in the configuration information received by the receiving unit 4021. The network equipment is configured according to the configuration parameters contained in the configuration information received by the receiving unit. The specific principles are presented in the corresponding description of the first, second, third and fourth embodiments.

It can be seen from the above description that, in the network system according to this embodiment, as an XML-based configuration template is pre-stored on the network equipment 402, when a management user needs to configure the network equipment, the management user needs to deliver configuration information including an identifier of a configuration template to be called and configuration parameters on the network equipment management system 401 only. After receiving the configuration information, the network equipment 402 calls a configuration template pre-stored locally and corresponding to the configuration template identifier, and puts the delivered configuration parameters into the configuration template to configure the network equipment 402. It is no longer necessary as in the technical solution in the prior art that the network equipment management system 401 delivers a complete configuration code to the network equipment 402 and the network equipment 402 then performs the delivered configuration codes to complete the current configuration of the network equipment during each configuration. Therefore, the network system according to this embodiment may reduce configuration codes to be delivered for configuration and decrease the redundancy of information interacted between the network equipment management system 401 and the network equipment 402 during each configuration, so as to increase the configuration efficiency of the network equipment.

It should be noted that the network system of this embodiment may be implemented through both hardware and a software function template. The system in this embodiment may be sold and used as a separate product, and may also be stored in a computer readable storage medium.

The network equipment configuration method, the network equipment, and the network system provided in the embodiments of the present invention are illustrated in detail. Specific examples are used to illustrate the principles and implementation of the embodiments of the present invention. The illustrations of the embodiments are merely provided for ease of understanding of the method and principles.

## Claims

1. A network equipment configuration method, comprising:
receiving (201), by network equipment, configuration information, wherein the configuration information comprises an identifier of a configuration template to be called and configuration parameters; and
calling (202, 203), by the network equipment, a configuration template pre-stored locally and identified by the configuration template identifier, and putting the configuration parameters into the configuration template to configure the network equipment;
wherein the configuration template is based on the extensible markup language (XML).

2. The network equipment configuration method according to claim 1, wherein the XML that the configuration template is based on is an extensible stylesheet language transformation (XSLT) language, and before receiving, by the network equipment, the configuration information, the method comprises:
receiving and storing, by the network equipment, a configuration script using the XSLT language and comprising configuration logic, wherein the configuration script serves as a configuration template; and
calling, by the network equipment, a configuration template identified by the configuration template identifier, and substituting the configuration parameters to configure the network equipment, wherein the calling and substituting comprise:
calling, by the network equipment, a configuration script identified by the configuration template identifier;
substituting, by the network equipment, the configuration parameters in the configuration logic, so as to obtain a sub-set of configuration objects to be configured currently;
traversing, by the network equipment, the sub-set of the configuration objects t o obtain current information of the configuration objects, wherein configuration objects with configurable current information are taken as a sub-set of configurable configuration objects; and
performing, by the network equipment, configuration operations in the configuration template on the sub-set of configurable configuration objects to configure the network equipment.

3. The network equipment configuration method according to claim 1, wherein the XML that the configuration template is based on is an XSLT language, and before receiving, by the network equipment, the configuration information, the method further comprises:
receiving and storing, by the network equipment, a configuration script using the XSLT language sent by a client, wherein the stored configuration script serves as a configuration template, and the configuration information received by the network equipment further comprises filtering logic for configuration objects using the XML path language; and
calling, by the network equipment, a configuration template identified by the configuration template identifier, and substituting the configuration parameters to configure the network equipment, wherein the calling and substituting comprise:
obtaining, by the network equipment, a sub-set of configuration objects according to the filtering logic for the configuration objects;
traversing, by the network equipment, the sub-set of the configuration objects to obtain current information of the configuration objects, wherein configuration objects with configurable current information are taken as a sub-set of the configurable configuration objects; and
performing, by the network equipment, configuration operations in the configuration template on the sub-set of the configurable configuration objects to configure the network equipment.

4. The network equipment configuration method according to claim 1, wherein the configuration template is based on the XML, wherein before receiving, by the network equipment, the configuration information, the method further comprises:
receiving and storing, by the network equipment, a configuration segment using the XML sent by a client as the configuration template; and
calling, by the network equipment, the configuration template identified by the configuration template identifier, and substituting the configuration parameters to configure the network equipment, wherein the calling and substituting comprise:
obtaining, by the network equipment, the configuration segment identified by the configuration template identifier;
substituting, by the network equipment, the configuration parameters in the configuration segment, so as to obtain a configuration segment ready to be submitted; and
submitting, by the network equipment, the configuration segment ready to be submitted to a whole set of the configuration objects to configure the network equipment.

5. A network equipment, comprising:
a receiving unit (301), configured to receive configuration information, wherein the configuration information comprises an identifier of a configuration template to be called and configuration parameters;
a template storing unit (302), configured to store the configuration template, wherein each stored configuration template corresponds to the identifier of the configuration template, and the configuration template is based on the extensible markup language (XML); and
a configuring unit (303), configured to call a configuration template identified by a configuration template identifier from the template storing unit according to the configuration template identifier contained in the configuration information received by the receiving unit, and configure the network equipment according to the configuration parameters contained in the configuration information received by the receiving unit.

6. The network equipment according to claim 5, wherein the configuration template stored by the template storing unit is a configuration script using an extensible stylesheet language transformation (XSLT) language, or a configuration script using an XSLT language and comprising configuration logic, or a configuration segment using the XML.

7. A network system, comprising:
a network equipment management system (401), comprising a configuration information delivering unit, wherein the configuration information delivering unit is configured to deliver configuration information to network equipment, and the configuration information comprises an identifier of a configuration template to be called, and configuration parameters; and
a network equipment (402), configured to receive the configuration information delivered by the network equipment management system, call a configuration template pre-stored locally and identified by the configuration template identifier, and put the configuration parameters into the configuration template to configure the network equipment;
wherein the configuration template is based on the extensible markup language (XML).

8. The network system according to claim 7, wherein the network equipment management system further comprises:
a configuration template delivering unit (4011), configured to deliver the configuration template to the network equipment to be pre-stored in the network equipment.

9. The network system according to claim 7 or 8, wherein the network equipment comprises:
a receiving unit (4021), configured to receive the configuration information delivered by the network equipment management system;
a template storing unit (4022), configured to store the configuration template, wherein each stored configuration template corresponds to an identifier of the configuration template; and
a configuring unit (4023), configured to call a configuration template identified by the configuration template identifier from the template storing unit according to a configuration template identifier contained in the configuration information received by the receiving unit, and configure the network equipment according to the configuration parameters contained in the configuration information received by the receiving unit.
